(19) Europäisches Patentamt / European Patent Office / Office européen des brevets

(11) **EP 1 517 314 B1**

(12) **EUROPEAN PATENT SPECIFICATION**

(45) Date of publication and mention
of the grant of the patent:
**29.08.2012 Bulletin 2012/35**

(51) Int Cl.:
***G11B 7/0037*** (2006.01)   ***G11B 7/09*** (2006.01)

(21) Application number: **04009548.1**

(22) Date of filing: **22.04.2004**

(54) **Optical disk drive focusing apparatus**

Fokussiervorrichtung für optisches Plattenlaufwerk

Appareil de focalisation pour lecteur de disque optique

(84) Designated Contracting States:
**DE ES FR GB IT NL**

(30) Priority: **12.09.2003 US 661752**

(43) Date of publication of application:
**23.03.2005 Bulletin 2005/12**

(73) Proprietor: **HEWLETT-PACKARD DEVELOPMENT COMPANY, L.P.**
**Houston, TX 77070 (US)**

(72) Inventor: **Hanks, Darwin Mitchel**
**Fort Collins**
**Colorado 80525 (US)**

(74) Representative: **Schoppe, Fritz et al**
**Schoppe, Zimmermann, Stöckeler & Zinkler**
**Patentanwälte**
**Postfach 246**
**82043 Pullach bei München (DE)**

(56) References cited:
EP-A1- 0 805 439      JP-A- 2003 242 669
US-A1- 2002 136 111   US-A1- 2002 191 517
US-B1- 6 239 572

## Description

BACKGROUND

When reading or writing data to the data side of a CD, conventional use of a FES (focus error signal) provides information that allows operation of a dosed-loop feedback circuit to keep the optical pickup unit (OPU) focused on the data pits defined on an upper surface of a plastic layer.

However, emerging technology makes it possible to write to the label side of the CD, thereby producing an image, text and/or graphics. Unfortunately, conventional use of a FES to focus on the label side of the disk is ineffective.

An initial difficulty in focusing on the label side of the disk is that the FES signal provides a low signal-to-noise ratio, in part due to the nature of the media used to cover the label side of the disk. Because of the low signal-to-noise ratio, conventional use of a FES signal configured in a closed-loop feedback circuit will not effectively provide signals to the actuator focus coil which result in convergence on the intended focal point, i.e. the surface of the disk.

A second difficulty in using the FES signal in a conventional manner is that the OPU is configured to have an at-rest focal point that is further from the laser and optics than the surface of the label side of the disk. This is because the OPU is designed to focus on data pits defined within the optical disk, approximately 1.2 mm from the surface of the data side of the disk. Thus, the laser and optics are out-of-focus when in the at-rest position.

Additionally, fitting of the disk within the optical disk drive and variances in the thickness of the disk produce focus errors that tend to appear as a sinusoidal variation once per revolution of the disk. Similarly, warping of the disk creates focus errors that may appear as a sinusoidal variation twice per revolution. Without an effective closed-loop feedback circuit, these sources of focus error can result in much degraded performance when marking an image to the label side of a disk.

EP 0 805 439 A1 describes an apparatus for compensating for radial and vertical runout of an optical disc using an actuator having a lens for focus of a laser beam, wherein the focus and tracking currents control the position of the lens in the vertical and radial directions. The apparatus focuses the actuator lens along at least one revolution of a track on an optical disc for producing lens position signals. Circuits are provided which respond to the lens position signals to produce the frequency content of surface height and track deviations of the optical disc using a frequency transform technique. The surface height and track deviations frequency content are stored as well as a signal representing the focusing and tracking actuator currents. In response to the focusing and tracking actuator current signals and the stored surface height and track deviation frequencies the lens position is controlled thereby reducing focusing and tracking errors.

US 6,239,572 B1 describes a servo control apparatus for performing a feedback control to an analog controlled system, which includes an error generating device that generates a digital error corresponding to a difference between a desired value and a feedback value corresponding to a controlled variable of the analog controlled system, a control device that generates a digital manipulated variable, and a digital-to-analog converting device that converts the digital manipulated variable into an analog manipulated variable for driving the analog controlled system. The control device includes a disturbance estimating device that estimates a disturbance applied to the analog controlled system by carrying out a digital estimating process by using the digital manipulated variable and the digital error and generates a digital compensated variable corresponding to the estimated disturbance, and a manipulated variable generating device that generates the digital manipulated variable by using the digital error and the digital compensated variable.

US 2002/136111 A1 describes a device with an optical disk drive with a digital servo system for controlling tracking or focus in an optical disk driver is presented. A servo system includes an optical pick-up with detectors providing optical signals, an analog processor receiving the optical signals and providing a digital signal, and digital processors receiving the digital signal and providing a control signal that controls the position of the optical pick-up unit. The digital processor executes an algorithm that calculates an error signal, provides amplification and biasing to the error signal, provides filtering for the error signal, and computes the control signal. The error signal can be the focus error signal or the tracking error signal. The device can be any device.

US 2002/191517 A1 describes a visible light characteristic changing layer formed from photosensitive or heat-sensitive material is formed in a location which can be viewed from a part of a label surface of an optical disk. The optical disk is set on a turntable of an optical disk unit while the label surface of the optical disk is directed downward. The optical disk and an optical pickup are moved mutually along the plane of the optical disk. In synchronism with the relative movement, the power of a laser beam output from the optical pickup is modulated in accordance with image data, such as characters or graphic images to be printed, and the laser beam is emitted onto the visible light characteristic changing layer. As a result of the visible light characteristic changing layer being exposed to the laser beam, a visible-light reflectivity of the visible light characteristic changing layer is changed, thereby forming a image corresponding to the image data on the label surface.

JP 2003-242669 A ; againts which claim 1 is delimited ; discloses an optical disk apparatus which is constructed for writing or reading information by irradiating a laser beam onto an optical disk while rotating the optical disk under a focus control of the laser beam relative to the rotated optical disk. Before writing on the label side, process patterns for focus control as a function of angle are determined at innermost and outermost circular areas, which are highly reflective. During writing on the label side open loop focus control by interpolating between these process patterns determined earlier is used.

## SUMMARY

It is the object of the invention to provide new and improved systems and methods of focusing the OPU on the label side.

This object is achieved by a system according to claim 1, an by a method according to claim 6.

A system, for providing an actuator control signal to an actuator within an optical pickup unit of an optical disk drive, focuses optics on an optical disk. A error term is obtained by sampling the FES (focus error signal) signal. The error term is scaled by an adaptation coefficient, which regulates a rate at which the error term modifies the actuator control signal. An actuator control signal generator generates the actuator control signal to control movement of the actuator, wherein the actuator control signal is a function of a prior actuator position, the error signal and the adaptation coefficient.

## BRIEF DESCRIPTION OF THE DRAWINGS

The following detailed description refers to the accompanying figures. In the figures, the left-most digit(s) of a reference number identifies the figure (Fig.) in which the reference number first appears. Moreover, the same reference numbers are used throughout the drawings to reference like features and components.

Fig. 1 is a diagrammatic view of an exemplary implementation of an optical disk drive.

Fig. 2 is a block diagram showing an exemplary implementation of a feed forward engine contained within firmware of the diagrammatic view of the optical disk drive of Fig. 1.

Fig. 3 is a view of an optical disk, illustrating exemplary division of the disk into a plurality of sectors.

Fig. 4 is a block diagram showing an exemplary implementation of portions of the feed forward engine.

Fig. 5 is a flow diagram illustrating an exemplary implementation focusing optics within an optical drive.

Fig. 6 is a diagrammatic view of a quad sensor, illustrating an in-focus condition.

Figs. 7 and 8 are diagrams similar to that of Fig. 6, in which the quad sensor detects out-of-focus conditions wherein the optics focus too dose and too far, relative to the focal point.

## DETAILED DESCRIPTION

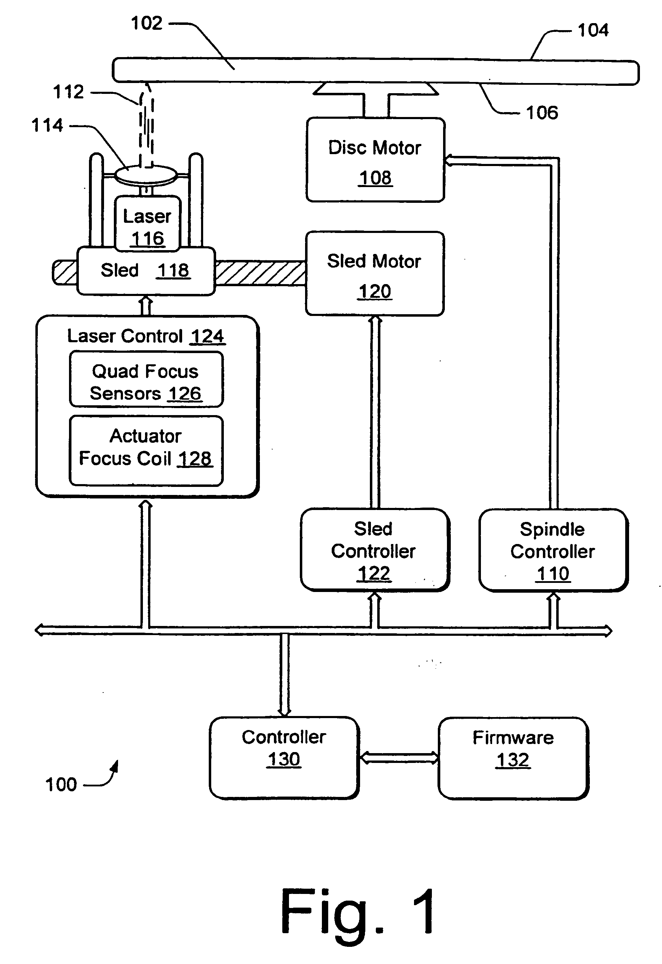

Fig. 1 shows a somewhat diagrammatic view of an exemplary disk drive and controller system 100. A disk 102 having an information side 104 is oriented to position a label side 106 for marking. The disk is rotated by a disk or spindle motor 108, which is controlled by a spindle controller 110. A laser beam 112 strikes a coated surface of the label side 106 of the disk 102 after passing through optics, such as a lens 114. A laser 116 is carried by a sled 118, which is moved in a radial direction by a sled motor 120. In a typical application, the sled motor 120 advances the sled 118, carrying the laser 116, in incremental steps from a radially inner edge of the label region, to a radially outer edge of the label region under the direction of a sled controller 122.

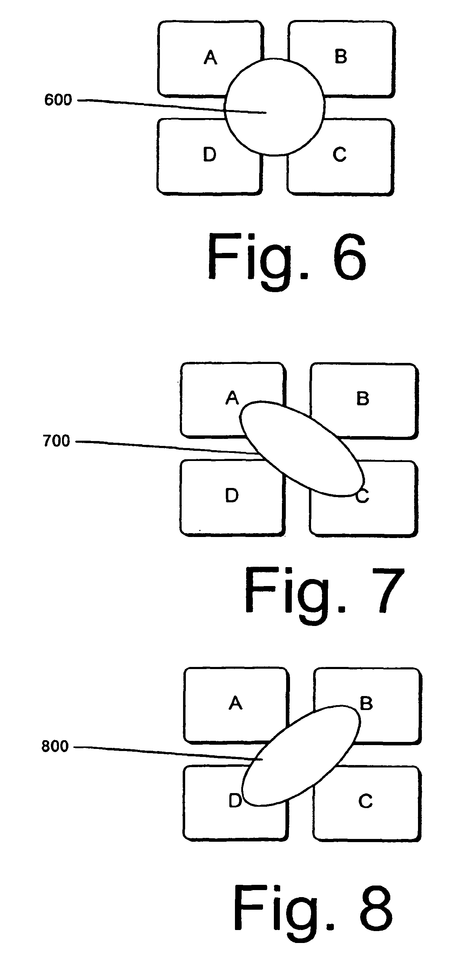

A laser controller 124 controls the operation of the laser 116 and associated tracking coils and sensors. In the example of Fig. 1, a quad focus sensor 126 typically contains four sensors, and is designed to facilitate focusing generally, in part by sensing the distance between the laser and the disk. The operation of the quad focus sensors may be understood with reference to Figs. 6-8. In Fig. 6, the four quad sensors, labeled A-D are seen. The output of the quad sensors may be used to form both the FES (focus error signal) and the SUM signal. The FES signal is defined: $FES = (V_A + V_C) - (V_B + V_O)$, wherein $V_A$ is the voltage of sensor A, etc. The SUM signal is defined: $SUM = V_A + V_B + V_C + V_D$. Reflected light 700 is seen in a generally circular configuration, which implies that each sensor is similarly affected. Accordingly, the FES signal is approximately zero (0) volts. Figs. 7 and 8 illustrate conditions wherein the reflected light 800, 900 indicates that the optics is in front of, and behind, the focal point. The outputs of the four sensors are combined to form the SUM signal, (or the difference of the diagonals is used to form the FES signal), both of which are discussed below. An actuator focus coil 128 is configured to adjust the optics 114 to focus the laser 116 at points both toward and away from, the disk 102.

A controller 130 controls the operation of the exemplary disk drive and controller system 100. in particular, the controller 130 is configured to execute program statements such as those contained in firmware 132.

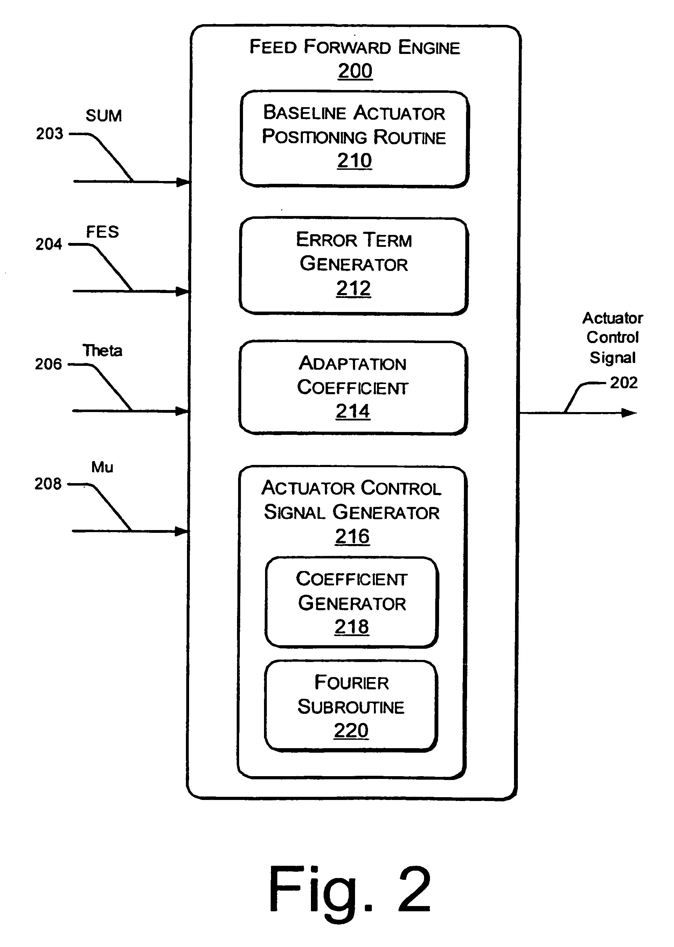

Fig. 2 shows an exemplary feed forward engine 200, which may be defined by program statements contained within firmware 132 for execution by the processor or controller 130. The feed forward engine 200 receives one or more inputs and provides as output an actuator control signal 202, which can be fed into the actuator focus coil 128 (Fig. 1) to control the focus of the laser 116, optics 114 and associated assembly. The exemplary feed forward engine 200 receives inputs including a FES (focus error signal) signal 204 from the quad focus sensors 126 (Fig. 1), the SUM signal 203 (also from the quad focus sensors) and an angle theta 206 which describes the angular orientation of the disk 102 (Fig. 1) within the optical drive 100 (Fig. 1). In some implementations, a coefficient Mu 208 is also provided to the feed forward engine. As will be seen in greater detail below, the coefficient Mu balances a rate at which the FES signal 204 is used to modify a current voltage applied to the actuator focus coil 128. This is important, in part because the FES signal is typically fairly noisy, when used to focus on the label side 106 of the disk 102. In part because the FES signal was not intended for use in focusing the laser optics on the label side 106 of the disk 102, the standard approach of using a high bandwidth feedback loop does not work well. Accordingly, the FES signal is scaled by one or more factors, such as Mu. The value of the Mu input 208 may be more fully understood by realizing that if the FES signal is allowed to overly influence a present value of the voltage input to the actuator coil 128, the actuator coil 128 may swing too wildly and fail to converge, i.e. focus the laser on the label surface 106 of the disk. This is due in large part to the differences encountered when focusing on the coating on the surface 106 of the disk 102, rather than on data pits defined within the interior of the disk, as is conventionally done. In a worst case situation, if Mu were not used to damp changes brought on by wild swings in the value of the FES signal, the focal point may leave a region within which the FES signal may be detected; this could cause a complete failure to focus. However, if the FES signal is overly suppressed from influencing the present value of the voltage input to the actuator coil 128, the laser may not respond quickly enough to changing conditions, and may fail to focus. Accordingly, the value of Mu input 208 should be selected according to the specific application to result in proper focus.

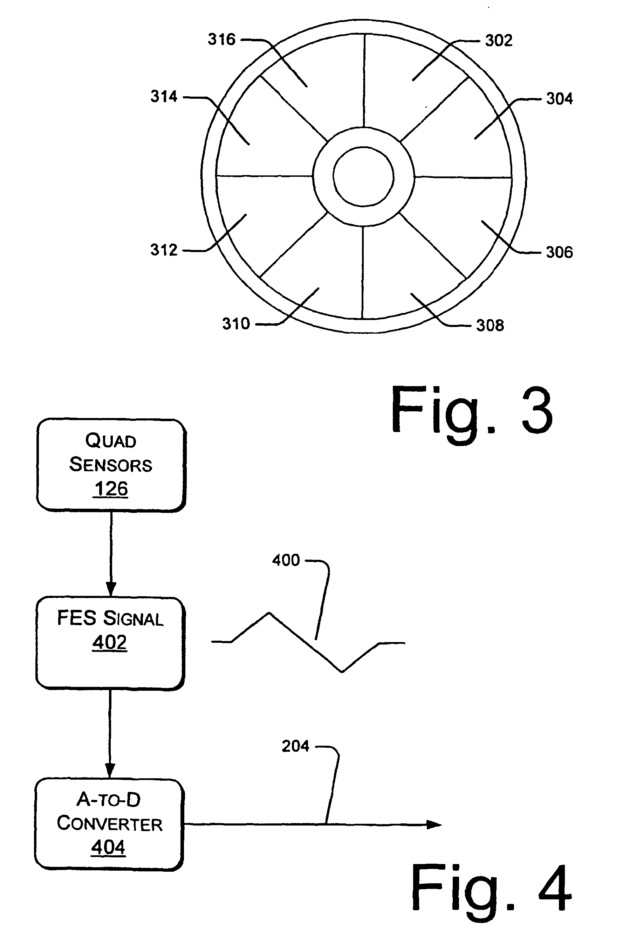

A baseline actuator positioning routine 210 is configured to determine a baseline voltage level for application to the actuator focus coil 128, to result in an associated baseline actuator position and focus optics position on the surface 106 of the disk 102. The actuator 128 has an inherent, initial or at-rest position, which may reflect an Inherent or default voltage applied to the coil, or which may reflect the coil being allowed to "float" at an initial voltage level. As a result, the focal optics moved by the actuator have an inherent, default or at-rest focal point. In part because the optics 114 are designed to focus on a location within the disk, the at-rest position of the actuator 128 and optics 114 is typically too close to the disk to result in proper focus on the disk surface 106 without application of a signal to the actuator 128. As a result, it is beneficial to establish a baseline voltage, the application of which to the actuator coil 128 results in approximate focusing of the optics 114 on the surface 106 of the disk 102. Accordingly, the baseline actuator positioning routine 210 determines the baseline voltage level. It is sometimes the case that the baseline voltage has an AC component, i.e. the baseline voltage may vary as a function of the angular orientation (i.e. the spin) of the disk. Such an AC component can vary according to the sectors of Fig. 3, or as a function of the angular disk orientation. Such an AC component allows the baseline voltage to vary the actuator focus coil 128 to maintain the focus of the optics 114 on the surface 106 of the disk 102, even where the disk is warped, wedge-shaped, or otherwise imperfect.

In a first exemplary implementation, the baseline actuator positioning routine 210 is configured to apply an initial voltage to the actuator coil 128 to move the focal point of the optics 114 away from the disk 102 (Fig. 1) by an amount calculated to counteract an initial design assumption typically built into the actuator coil. The design assumption is that the focus point should be inside the plastic disk 102, to facilitate data reading and writing. However for labeling the disk, the focus point should be on the disk surface. Accordingly, a baseline voltage may be estimated to result in movement of the actuator coil 128, and an associated change in the focal point of the optics 114, which retracts the focal point by an appropriate fraction of the thickness of the optical disk 102, thereby causing the focal point to be (approximately) on the surface 106 of the disk 102.

The above first exemplary implementation of the baseline positioning routine 210 makes a first assumption that the optics 114. is focused on a point a known depth beneath the surface 106 of the disk 102, and a second assumption that a voltage can be calculated to move the focal point to the surface of the disk. A second implementation of the baseline positioning routine 210 is based on the use of objective measurements. The baseline actuator positioning routine 210 is configured to move the optics 114 through a full range of focus, i.e. from focusing too near to focusing too far away. The baseline actuator positioning routine 210 is configured to step the actuator coil 128 through this range incrementally, and to record values obtained from the SUM. Upon completion of the application of the range of voltages to the actuator coil 128, and movement of the focus optics, the maximum value of the SUM signal is recorded. This value may be assumed to have occurred when the optics was approximately in focus; additionally, the voltage which resulted in the position of the optics may be taken as the baseline voltage.

Alternatively, to cancel some inaccuracies within the operation of the actuator focus coil 128, DC voltage may again be stepped incrementally into the actuator focus coil to move the optics 114 until the SUM signal is approximately 75% (more or less) of the maximum recorded during the first application of incremental voltages to the actuator coil 128. This DC voltage level may be used as the baseline voltage level.

Note that different sectors of the disk may be assigned a different baseline voltage, if desired. For example, Fig. 3 illustrates a disk logically divided into 8 sectors 302-316. Each of the sectors could be assigned a different baseline voltage, thereby reducing focus error in each sector. Accordingly. the baseline voltage may include an alternating current component.

The operation of the quad focus sensors 126 may be better understood by briefly referring to Fig. 4. The quad sensors 126 (previously seen in Fig. 1) are typically optical sensors which respond to a reflection of the laser light 112. The FES (focus error signal) signal 204 is the difference of the sum of the diagonal sensors (i.e. upper left plus lower right, minus upper right plus lower left). An exemplary FES signal 400 is seen to the right of box 402 in Fig. 4. The FES signal is zero where the optics 114-116 are out of focus. As the optics move into focus, the FES signal becomes positive triangle wave. As the optics moves out of focus, the FES signal becomes a negative triangle wave. Note that the FES signal 400 is for illustration purposes only; a real FES signal would contain considerably noisier.

Referring again to Fig. 2, the error term generator 212 is configured to process the FES (focus error signal) signal 402 to create an error term 204 (Fig. 4). In a typical application, an A-to-D converter 404 (Fig. 4) enables the error term generator 212 to translate the FES signal into a digital error term 204. The digital values of the FES signal are suitable for insertion into equations to generate coefficients for Fourier series terms, as will be seen in greater detail below.

An actuator control signal generator 216 generates the signal 202 applied to the actuator focus coil 128. In a practical application, the output of the signal generator 216 is typically a digital value, which is converted to an analog signal via a DAC (digital to analog converter) for coupling to the actuator focus coil 128.

The actuator control signal generator 216 may be configured in a number of ways. In a first embodiment, a coefficient generator 218 is configured to generate coefficients for a Fourier series and a Fourier subroutine 220 is configured to utilize the coefficients generated to generate the signal for application to the actuator focus coil. For example, where a Fourier series having five terms is used, five coefficients could be generated according to:

$$A0(new) = A0(old) + (DC0 * Ek * Mu);$$

$$A1(new) = A1(old) + (QS1 * Ek * Mu);$$

$$B1(new) = B1(old) + (QC1 * Ek * Mu);$$

$$A2(new) = A2(old) + (QS2 * Ek * Mu);$$

and

$$B2(new) = B2(old) + (QC2 * Ek * Mu).$$

The above equations provide five new coefficients (e.g. A0 (new)) using the five previous old coefficients (e.g A0(old)). For example, in one implementation, a new value for each coefficient is calculated 400 times per revolution of the disk 102. (While 400 such calculations per revolution is effective, other rates of calculation could be substituted, depending on application.) As the disk rotates, the error values, Ek, would change 400 times per revolution, as the FES signal was sampled. Additionally, the values for the sinusoidal terms (QS1 through QC2) would change due to a changing angle of rotation of the disk. Note that the initial value of A0 is the baseline value calculated by the baseline actuator positioning routine 210, and the initial values for A1-B2 are zero.

The above equations use A0 to express the coefficient for the non-sinusoidal first term, the nominal DC voltage level (DC0). The terms An and Bn express coefficients for sinusoidal terms "n", respectively. Terms of the form QS1 or QC2 correspond to a value of the sine or cosine of the first or second harmonic, as indicated, wherein the angle applied to the sinusoidal function is the angle of rotation of the disk (i.e. angular orientation) within the disk within the disk drive. Note that the angle of the sine or cosine is typically multiplied by a scalar, such as 1, 2, etc., so that the coefficients will have different frequency. For example, QS1 might be sin(theta), while QC2 might be cos (2 * theta). An adaptation coefficient, Mu, is related to how fast the error coefficient, Ek, is allowed to change the value of the new coefficient. For example, Mu impacts how much change is possible between A1(new) and A1(old).

A Fourier routine 220 is configured to use the coefficients from the coefficient generator 218 and the angle of the disk rotation to produce the actuator control signal 202. The new coefficients may be applied according to the following:

Actuator control signal = $(A0 * DC0) + (A1 * QS1) + (B1 * QC1) + (A2 * QS2) + (B2 * QC2)$

In this case QS1 and QC2, for example, are the sine and cosine values, respectively, for the given value of an angle theta and two times theta, respectively, for the first and second harmonic, respectively.

In an alternative implementation, the actuator control signal generator 216 can be implemented without coefficients and a Fourier series. Such a more generalized feed forward scheme could be implemented wherein no-predetermined shape to the feed forward signals is defined. For each bit time, one bit of a sequence that starts at one point in the revolution of the disk and ends when the disk rotates back around to that point again could be stored in memory. Each bit in this sequence would be updated by the least mean squares (LMS) algorithm, but this time the algorithm would be:

$$Wk(new) = Wk(old) - Mu * Ek.$$

Note that the equations above tend to work well for lower frequency spin rates (e.g. 300 rpm or so of the disk 102) and lower sample rates. Lower disk spin rates and sample rates tend to result in motion of the actuator that is below the actuator's resonant frequency. However, the resonant frequency of the actuator may result in a failure of focus to converge at higher disk speeds (i.e. higher disk rpm) and higher sample rates. That is, the resonant frequency of the actuator must be taken into account at higher disk spin rates; otherwise the input to the actuator will not result in the output expected, i.e. output which will result in movement of the optics to converge on a focal point. In the case of the Fourier series-based implementation, if the spindle speed increases to where the first, second or third harmonics of the once around are above the first suspension resonance of the focus actuator (at about 45 Hz) or if higher harmonics are to be used, then the value of the sine or cosine wave that is multiplied by the Ek * Mu products will also need to be phase shifted by the value of the response of the actuator to that input. Such a phase shift of terms within the actuator control signal will reduce actuator resonance. For example: A1(new) = A1(old) + (QS1(theta)* Ek * Mu), where QS1 (theta) equals QS1 phase shifted by the phase shift of the actuator at the frequency of Qs1. As seen in the equation above, the phase of terms within the actuator control signal are shifted to the degree necessary compensate for actuator harmonics (e.g. an actuator resonant frequency). This may be necessary if an angular disk speed of the optical disk drive is sufficiently high. For example, exemplary disk speed (rpm) could be associated with a degree to which the actuator control signal is phase-shifted. The degree of the phase shift applied would generally have to be determined by experimentation on the actuator available. Accordingly, a table could associate disk speed rpm with a phase-shift of the actuator control signal.

For the case of the more generalized, non-Fourier Series implementation, compensation for the actuator resonance may be necessary if the sample rate exceeds the frequency of the resonance. This can be done by filtering the Ek values with a digital filter model of the inverse of the actuator frequency response before adapting each Wk. By passing the Ek values through the inverse filter function before applying to the adaptation algorithm. Wk(new) = Wk(old) - Mu * Ek, the effects of the actuator resonance are essentially cancelled.

Other alternatives to the above method of handling the issue of actuator resonant frequency exist. For example, the Filtered X approach, known in algorithms related to adaptive LMS (least mean squares) filtering, could be utilized.

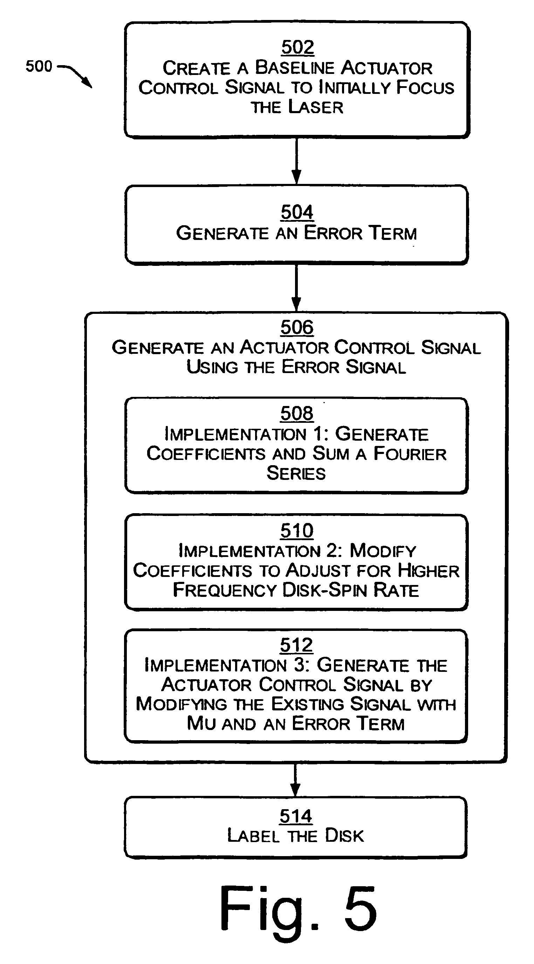

The flowchart of Fig. 5 illustrates a further exemplary implementation, wherein a method 500 is employed to focus the optics of an optical disk drive 100. The elements of the method may be performed by any desired means, such as by the execution of processor-readable instructions defined on a processor-readable media, such as a disk, a ROM or other memory device or by operation of an application specific integrated circuit (ASIC) or other hardware device. In one implementation, the ROM may contain the firmware 132 of Fig. 1, thereby implementing the feed forward engine 200 of Fig. 2 according to a method such as the exemplary method as seen in the flow chart of Fig. 5. In an alternative implementation, an ASIC may contain logic which implements the feed forward engine 200. Also, actions described in any block may be performed in parallel with actions described in other blocks, may occur in an alternate order, or may be distributed in a manner which associates actions with more than one other block.

At block 502, a baseline actuator control signal is generated. The baseline actuator control signal, when applied to the actuator focus coil 128, results in the laser focusing sufficiently that the SUM and FES signals obtained from the quad focus sensors 126 are non-zero. The baseline actuator control signal may be generated in a number of ways. For example, the first exemplary implementation of the baseline actuator positioning routine 210, described above, may be utilized. Recall that in that method, the baseline actuator signal was generated by assumptions made as to the location of the at-rest focal point and the signal required for application to the actuator focus coil 128 to move the focal point to the surface 106 of the disk 102. Alternatively, the second exemplary implementation of the baseline actuator positioning routine 210, described above, may be utilized. Recall that in that method, a range of voltages was applied to the actuator focus coil 128 and the SUM and/or FES signal was monitored. A signal applied to the focus actuator coil 128 associated with a near optimal value of the SUM and/or FES signal could be utilized. Alternatively by stepping the voltage applied to the actuator coil 128, a baseline voltage could be selected from the stepped voltage level when the SUM signal was near the high SUM value.

At block 504, an error term is generated. The error term is generated by the error term generator 212, using the FES (focus error signal), as seen above. The FES signal is converted into a digital value, which is used as the error term.

At block 506, an actuator control signal 202 is generated using the error term and other terms. In particular, the actuator control signal 202 may be generated by the actuator control signal generator 216 of the feed forward engine 200. A number of exemplary, alternative and/or complementary implementations of the method by which the actuator control signal 202 is generated are shown in blocks 508-512. In an implementation at block 508, coefficients are generated and a Fourier series is summed. As seen above, a coefficient generator 216 can generate coefficients for use in a Fourier series. The Fourier subroutine 220, using the coefficients and a value for the angle of the disk orientation 206, determines the actuator control signal 202. This actuator control signal, which has been updated via the coefficient generator 216, becomes the new baseline signal for the next adaptation cycle.

In an optional implementation seen in block 510, where the spin-rate of the disk is high enough to interact with the suspension resonance of the actuator coil, the coefficient generator 218 can be modified to compensate for the interaction. This optional implementation was discussed with reference to the coefficient generator 218, in the discussion of Fig. 2, above.

In a further optional implementation seen at block 512, the actuator control signal generator 216 can be implemented without Fourier coefficients and without a Fourier series. As seen above, such a generalized feed forward scheme could be implemented wherein no predetermined shape to the feed forward signals is defined.

At block 514, a label image is applied to the label surface 106 of the disk 102. As the disk turns, the feed forward engine 200 continuously provides an actuator control signal 202 to the focus actuator coil 128, enabling the optics 114 to maintain the focus of the laser 116 on the surface of the disk. The laser beam 112 then applies an image to the coating on the surface 106 of the disk 102.

Although the above disclosure has been described in language specific to structural features and/or methodological steps, it is to be understood that the appended claims are not limited to the specific features or steps described. Rather, the specific features and steps are exemplary forms of implementing this disclosure. For example, while actions described in blocks of the flow diagrams may be performed in parallel with actions described in other blocks, the actions may occur in an alternate order, or may be distributed in a manner which associates actions with more than one other block. And further, while elements of the methods disclosed are intended to be performed in any desired manner, it is anticipated that computer- or processor-readable instructions, performed by a computer and/or processor, typically located within a firmware 132, reading from a computer- or processor-readable media, such as a ROM, disk or CD ROM, would be preferred, but that an application specific gate array (ASIC) or similar hardware structure, could be substituted.

**Claims**

1. A system for providing an actuator control signal (202) to an actuator (128) within an optical disk drive (100), to focus optics (114) on a label side (106) of an optical disk (102) within the optical disk drive (100), wherein the system comprises:

   an error term generator (212) configured to generate an error term using a FES signal (204) as input; **characterized in that** the error term generator (212) is configured to generate the error term by sampling the FES signal (204) as the optical disk (102) rotates during writing an image on the label side (106), and **in that**
   an adaptation coefficient (214) is configured to regulate a rate at which the error term modifies the actuator control signal (202), wherein the adaptation coefficient (214) is configured to damp changes in the error term to maintain a focal point within a detectable region; and by
   an actuator control signal generator (216) to generate the actuator control signal (202), wherein the actuator control signal (202) is a function of a prior actuator position, the error term and the adaptation coefficient, wherein the actuator control signal (202) is output by a feed forward engine (200), the feed forward engine (200) comprising the error term generator (212), the adaptation coefficient (214), and the actuator control signal generator (216).

2. The system of claim 1, wherein the error term generator (212) is configured to sample the FES signal (204) and use an A-to-D converter to produce the error term.

3. The system of claim 1, wherein the error term generator (212) is configured to calculate the error term for every new actuator control signal (202) generated by the actuator control signal generator (216).

4. The system of claim 1, wherein the actuator control signal generator (216) additionally comprises:

   a coefficient generator (218) to generate coefficients as a function of inputs comprising the adaptation coefficient (214) and the error term; and
   a Fourier subroutine (220) to generate the actuator control signal (202) using the coefficients generated, and the adaptation coefficient (214) is configured to limit a change between a new coefficient and an old coefficient.

5. The system of claim 1 or 4, wherein the feed forward engine (200) further comprises a base line actuator positioning routine (210) for establishing a baseline signal for application to the actuator (128), the base line actuator positioning routine (210) being configured to:

   apply actuator control signals to the actuator (128) to step the actuator (128 through a full range of focus;
   obtain a SUM signal at each step, the SUM signal being a sum of signals received from a plurality of focus sensors (126);
   identify one of the obtained SUM signals; and
   set the baseline actuator control signal according to an applied actuator control signal which resulted in the identified one of the obtained SUM signals.

6. A method of focusing optics on a label side (106) of a disk (102) within an optical disk drive (100), comprising:

   generating (504) an error term using a FES signal (204) as input;
   regulating a rate at which the error term modifies an actuator control signal (202) using an adaptation coefficient (214), wherein the adaptation coefficient (214) is configured to damp changes in the error term to maintain a focal point within a detectable region; and
   generating (506) an actuator control signal as a function of a prior actuator (128) position, the error term and the adaptation coefficient (214),
   wherein generating (504) the error term comprises sampling the FES signal (204) as the optical disk (102) rotates during writing an image on the label side (106), and
   wherein the method comprises outputting the actuator control signal (202) by a feed forward engine (200), the feed forward engine (200) comprising an error term generator (212), the adaptation coefficient (214), and an actuator control signal generator (216).

7. The method of claim 6, additionally comprising sampling the FES signal (204) and using an A-to-D converter to produce the error term.

8. The method of claim 6 or 7, additionally comprising calculating the error term for every new actuator control signal (202) generated by the actuator control signal generator (216).

9. The method of claim 6, wherein generating the actuator control signal (202) comprises:

   generating coefficients as a function of inputs comprising the adaptation coefficient (214) and the error term; and
   calculating (508) a Fourier series to generate the actuator control signal (202) using the coefficients generated, and
   wherein the adaptation coefficient (214) limits a change between a new coefficient and an old coefficient.

10. The method of claim 6 or 9, comprising establishing a baseline signal for application to the actuator (128) by applying actuator control signals to the actuator (128) to step the actuator (128 through a full range of focus; obtaining a SUM signal at each step, the SUM signal being a sum of signals received from a plurality of focus sensors (126);
identifying one of the obtained SUM signals; and
setting the baseline actuator control signal according to an applied actuator control signal which resulted in the identified one of the obtained SUM signals.

11. A processor-readable medium comprising processor-executable instructions for focusing optics (114) to a label side (106) of an optical disk drive (100), the processor-executable instructions comprising instructions for carrying out the method of one of claims 6 to 11 when the processor-executable instructions are executed by a processor.

**Patentansprüche**

1. System zum Bereitstellen eines Aktorsteuersignals (202) an einen Aktor (128) in einem optischen Plattenlaufwerk (100), um eine Optik (114) auf eine Etikettseite (106) einer optischen Platte (102) in dem optischen Plattenlaufwerk (100) zu fokussieren, wobei das System Folgendes umfasst:

   einen Fehlertermgenerator (212), der dazu konfiguriert ist, einen Fehlerterm unter Verwendung eines FES-Signals (204) als Eingabe zu generieren; **dadurch gekennzeichnet, dass** der Fehlertermgenerator (212) dazu konfiguriert ist, den Fehlerterm durch Abtasten des FES-Signals (204) zu generieren, während die optische Platte (102) sich während des Schreibens eines Bilds auf die Etikettseite (106) dreht, und dass
   ein Anpassungskoeffizient (214) dazu konfiguriert ist, eine Rate zu regeln, mit der der Fehlerterm das Aktorsteuersignal (202) modifiziert, wobei der Anpassungskoeffizient (214) dazu konfiguriert ist, Veränderungen des Fehlerterms abzuschwächen, um einen Fokalpunkt in einer erfassbaren Region aufrechtzuerhalten; und durch einen Aktorsteuersignalgenerator (216) zum Generieren des Aktorsteuersignals (202), wobei das Aktorsteuersignal (202) von einer vorherigen Position des Aktors, dem Fehlerterm und dem Anpassungskoeffizienten abhängt,
   wobei das Aktorsteuersignal (202) von einer Feed-Forward-Maschine (200) ausgegeben wird, wobei die Feed-Forward-Maschine (200) den Fehlertermgenerator (212), den Anpassungskoeffizienten (214) und den Aktorsteuersignalgenerator (216) umfasst.

2. System nach Anspruch 1, wobei der Fehlertermgenerator (212) dazu konfiguriert ist, das FES-Signal (204) abzutasten und einen A/D-Wandler zum Erzeugen des Fehlerterms zu verwenden.

3. System nach Anspruch 1, wobei der Fehlertermgenerator (212) dazu konfiguriert ist, den Fehlerterm für jedes neue Aktorsteuersignal (202), das von dem Aktorsteuersignalgenerator (216) generiert wurde, zu berechnen.

4. System nach Anspruch 1, wobei der Aktorsteuersignalgenerator (216) zusätzlich Folgendes umfasst:

   einen Koeffizientgenerator (218) zum Generieren von Koeffizienten in Abhängigkeit von Eingaben, die den Anpassungskoeffizienten (214) und den Fehlerterm umfassen; und
   eine Fourier-Subroutine (220) zum Generieren des Aktorsteuersignals (202) unter Verwendung der generierten Koeffizienten, und
   wobei der Anpassungskoeffizient (214) dazu konfiguriert ist, eine Veränderung zwischen einem neuen Koeffizienten und einem alten Koeffizienten zu begrenzen.

5. System nach Anspruch 1 oder 4, wobei die Feed-Forward-Maschine (200) weiterhin eine Grundlinien-Aktorpositionierungsroutine (210) zum Erstellen eines Grundliniensignals zur Anwendung auf den Aktor (128) umfasst, wobei die Grundlinien-Aktorpositionierungsroutine (210) dazu konfiguriert ist:

   Aktorsteuersignale auf den Aktor (128) anzuwenden, um den Aktor (128) schrittweise durch einen kompletten Fokusbereich zu schalten;
   in jedem Schritt ein SUM-Signal zu beziehen, wobei das SUM-Signal eine Summe von Signalen ist, die von mehreren Fokussensoren (126) empfangen wurden;
   eines der bezogenen SUM-Signale zu identifizieren und
   das Grundlinien-Aktorsteuersignal gemäß einem angewendeten Aktorsteuersignal, das zu dem identifizierten der bezogenen SUM-Signale führte, einzustellen.

6. Verfahren zum Fokussieren einer Optik auf eine Etikettseite (106) einer Platte (102) in einem optischen Plattenlaufwerk (100), wobei das Verfahren Folgendes umfasst:

   Generieren (504) eines Fehlerterms unter Verwendung eines FES-Signals (204) als Eingabe;
   Regeln einer Rate, mit der der Fehlerterm ein Aktorsteuersignal (202) modifiziert, unter Verwendung eines Anpassungskoeffizienten (214), wobei der Anpassungskoeffizient (214) dazu konfiguriert ist, Veränderungen des Fehlerterms abzuschwächen, um einen Fokalpunkt in einer erfassbaren Region aufrechtzuerhalten; und
   Generieren (506) eines Aktorsteuersignals in Abhängigkeit von einer vorherigen Position eines Aktors (128), dem Fehlerterm und dem Anpassungskoeffizienten (214),

wobei das Generieren (504) des Fehlerterms das Abtasten des FES-Signals (204) umfasst, während die optische Platte (102) sich während des Schreibens eines Bilds auf die Etikettseite (106) dreht, und

wobei das Verfahren das Ausgeben des Aktorsteuersignals (202) von einer Feed-Forward-Maschine (200) umfasst, wobei die Feed-Forward-Maschine (200) einen Fehlertermgenerator (212), den Anpassungskoeffizienten (214) und einen Aktorsteuersignalgenerator (216) umfasst.

**7.** Verfahren nach Anspruch 6, das zusätzlich das Abtasten des FES-Signals (204) und das Verwenden eines A/D-Wandlers zum Erzeugen des Fehlerterms umfasst.

**8.** Verfahren nach Anspruch 6 oder 7, das zusätzlich das Berechnen des Fehlerterms für jedes neue Aktorsteuersignal (202), das von dem Aktorsteuersignalgenerator (216) generiert wurde, umfasst.

**9.** Verfahren nach Anspruch 6, wobei das Generieren des Aktorsteuersignals (202) Folgendes umfasst:

Generieren von Koeffizienten in Abhängigkeit von Eingaben, die den Anpassungskoeffizienten (214) und den Fehlerterm umfassen; und

Berechnen (508) einer Fourierreihe zum Generieren des Aktorsteuersignals (202) unter Verwendung der generierten Koeffizienten, und

wobei der Anpassungskoeffizient (214) eine Veränderung zwischen einem neuen Koeffizienten und einem alten Koeffizienten begrenzt.

**10.** Verfahren nach Anspruch 6 oder 9, das das Erstellen eines Grundliniensignals zur Anwendung auf den Aktor (128) umfasst, durch

Anwenden von Aktorsteuersignalen auf den Aktor (128), um den Aktor (128) schrittweise durch einen kompletten Fokusbereich zu schalten;

Beziehen eines SUM-Signals in jedem Schritt, wobei das SUM-Signal eine Summe von Signalen ist, die von mehreren Fokussensoren (126) empfangen wurden;

Identifizieren eines der bezogenen SUM-Signale und Einstellen des Grundlinien-Aktorsteuersignals gemäß einem angewendeten Aktorsteuersignal, das zu dem identifizierten der bezogenen SUM-Signale führte.

**11.** Prozessorlesbares Medium, das prozessorausführbare Anweisungen zum Fokussieren einer Optik (114) auf eine Etikettseite (106) eines optischen Plattenlaufwerks umfasst, wobei die prozessorausführbaren Anweisungen Anweisungen zum Durchführen des Verfahrens nach einem der Ansprüche 6 bis 11, wenn die prozessorausführbaren Anweisungen von einem Prozessor ausgeführt werden, umfassen.

**Revendications**

**1.** Système pour fournir un signal de commande d'actionneur (202) à un actionneur (128) à l'intérieur d'un lecteur de disque optique (100), pour focaliser une optique (114) sur un côté étiquette (106) d'un disque optique (102) à l'intérieur du lecteur de disque optique (100), dans lequel le système comprend :

un générateur de terme d'erreur (212) configuré pour générer un terme d'erreur à l'aide d'un signal d'erreur de focalisation (Focus Error Signal - FES) (204) comme entrée,

**caractérisé par le fait que** le générateur de terme d'erreur (212) est configuré pour générer le terme d'erreur par échantillonnage du signal FES (204) alors que le disque optique (102) tourne pendant l'écriture d'une image sur le côté étiquette (106), et **par le fait qu'**

un coefficient d'adaptation (214) est configuré pour réguler un taux avec lequel le terme d'erreur modifie le signal de commande d'actionneur (202), le coefficient d'adaptation (214) étant configuré pour amortir des changements dans le terme d'erreur afin de maintenir un point focal à l'intérieur d'une région détectable ; et par un générateur de signal de commande d'actionneur (216) pour générer le signal de commande d'actionneur (202), le signal de commande d'actionneur (202) étant une fonction d'une position d'actionneur antérieure, du terme d'erreur et du coefficient d'adaptation,

le signal de commande d'actionneur (202) étant émis par un moteur sans rétroaction (200), le moteur sans rétroaction (200) comprenant le générateur de terme d'erreur (212), le coefficient d'adaptation (214) et le générateur de signal de commande d'actionneur (216).

**2.** Système selon la revendication 1, dans lequel le générateur de terme d'erreur (212) est configuré pour échantillonner le signal FES (204) et utiliser un convertisseur analogique-à-numérique pour produire le terme d'erreur.

**3.** Système selon la revendication 1, dans lequel le générateur de terme d'erreur (212) est configuré pour calculer le terme d'erreur pour chaque nouveau signal de commande d'actionneur (202) généré par le générateur de signal de commande d'actionneur (216).

**4.** Système selon la revendication 1, dans lequel le générateur de signal de commande d'actionneur (216) comprend en outre :

- un générateur de coefficients (218) pour générer des coefficients en fonction d'entrées comprenant le coefficient d'adaptation (214) et le terme d'erreur ; et
- une sous-routine de Fourier (220) pour générer le signal de commande d'actionneur (202) à l'aide des coefficients générés ; et
- le coefficient d'adaptation (214) est configuré pour limiter un changement entre un nouveau coefficient et un ancien coefficient.

**5.** Système selon l'une des revendications 1 ou 4, dans lequel le moteur sans rétroaction (200) comprend en outre une routine de positionnement d'actionneur de ligne de base (210) pour établir un signal de ligne de base pour une application à l'actionneur (128), la routine de positionnement d'actionneur de ligne de base (210) étant configuré pour :

- appliquer des signaux de commande d'actionneur à l'actionneur (128) pour faire progresser pas à pas l'actionneur (128) à travers une plage complète de mise au point ;
- obtenir un signal SUM à chaque pas, le signal SUM étant une somme de signaux reçus d'une pluralité de détecteurs de mise au point (126) ;
- identifier l'un des signaux SUM obtenus ; et
- configurer le signal de commande d'actionneur de ligne de base conformément à un signal de commande d'actionneur appliqué qui a conduit à celui identifié des signaux SUM obtenus.

**6.** Procédé de mise au point d'une optique sur un côté étiquette (106) d'un disque (102) à l'intérieur d'un lecteur de disque optique (100), comprenant :

- la génération (504) d'un terme d'erreur à l'aide d'un signal FES (204) comme entrée ;
- la régulation d'un taux avec lequel le terme d'erreur modifie un signal de commande d'actionneur (202) à l'aide d'un coefficient d'adaptation (214), le coefficient d'adaptation (214) étant configuré pour amortir des changements dans le terme d'erreur afin de maintenir un point focal à l'intérieur d'une région détectable ; et
- la génération (506) d'un signal de commande d'actionneur en fonction d'une position d'actionneur (128) antérieure, du terme d'erreur et du coefficient d'adaptation (214),
- la génération (504) du terme d'erreur comprenant l'échantillonnage du signal FES (204) alors que le disque optique (102) tourne pendant l'écriture d'une image sur le côté étiquette (106), et
- le procédé comprenant la sortie du signal de commande d'actionneur (202) par un moteur sans rétroaction (200), le moteur sans rétroaction (200) comprenant un générateur de terme d'erreur (212), le coefficient d'adaptation (214) et un générateur de signal de commande d'actionneur (216).

**7.** Procédé selon la revendication 6, comprenant en outre l'échantillonnage du signal FES (204) et l'utilisation d'un convertisseur analogique-à-numérique pour produire le terme d'erreur.

**8.** Procédé selon l'une des revendications 6 ou 7, comprenant en outre le calcul du terme d'erreur pour chaque nouveau signal de commande d'actionneur (202) généré par le générateur de signal de commande d'actionneur (216).

**9.** Procédé selon la revendication 6, dans lequel la génération du signal de commande d'actionneur (202) comprend :

- la génération de coefficients en fonction d'entrées comprenant le coefficient d'adaptation (214) et le terme d'erreur ; et
- le calcul (508) d'une série de Fourier pour générer le signal de commande d'actionneur (202) à l'aide des coefficients générés, et
- le coefficient d'adaptation (214) limitant un changement entre un nouveau coefficient et un ancien coefficient.

**10.** Procédé selon l'une des revendications 6 ou 9, comprenant l'établissement d'un signal de ligne de base pour une application à l'actionneur (128) par :

- l'application de signaux de commande d'actionneur à l'actionneur (128) pour faire progresser pas à pas l'actionneur (128) à travers une plage complète de mise au point ;
- l'obtention d'un signal SUM à chaque pas, le signal SUM étant une somme de signaux reçus à partir d'une pluralité de détecteurs de mise au point (126) ;
- l'identification de l'un des signaux SUM obtenus ; et
- la configuration du signal de commande d'actionneur de ligne de base selon un signal de commande d'actionneur appliqué qui a conduit à celui identifié des signaux SUM obtenus.

**11.** Support pouvant être lu par un processeur, comprenant des instructions exécutables par un processeur pour focaliser une optique (114) sur un côté étiquette (106) d'un lecteur de disque optique (100), les instructions exécutables par un processeur comprenant des instructions pour mettre en oeuvre le procédé tel que défini à l'une des revendications 6 à 11 lorsque les instructions exécutables par un processeur sont exécutées par un processeur.

# Fig. 1

**Fig. 2**

316
302
314
304
312
306
310
308

# Fig. 3

QUAD
SENSORS
126

FES SIGNAL
402

400

A-TO-D
CONVERTER
404

204

# Fig. 4

Fig. 5

## Fig. 6

## Fig. 7

## Fig. 8

**EP 1 517 314 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0805439 A1
- US 6239572 B1
- US 2002136111 A1
- US 2002191517 A1
- JP 2003242669 A